# EUROPÄISCHE PATENTSCHRIFT

(11) **EP 3 417 226 B1**
(45) Veröffentlichungstag und Bekanntmachung des Hinweises auf die Patenterteilung: **22.01.2020**
(21) Anmeldenummer: 17705825.2
(22) Anmeldetag: 10.02.2017
(51) Int. Cl.: F27D 17/00, B01D 53/56, B01D 53/86, C04B 7/36, F27B 7/20

(54) **ANLAGE MIT EINER EIN ABGAS ERZEUGENDEN BEHANDLUNGSVORRICHTUNG SOWIE VERFAHREN ZUR BEHANDLUNG DES ABGASES IN EINER SOLCHEN ANLAGE**
INSTALLATION COMPRISING AN EXHAUST GAS-GENERATING TREATMENT DEVICE AND METHOD FOR TREATING EXHAUST GAS IN SUCH AN INSTALLATION
INSTALLATION COMPOSÉE D'UN DISPOSITIF DE TRAITEMENT GÉNÉRANT DES EFFLUENTS GAZEUX, AINSI QUE PROCÉDÉ DE TRAITEMENT DES EFFLUENTS GAZEUX DANS UNE TELLE INSTALLATION

(30) Priorität: 18.02.2016 DE 102016102833
(43) Veröffentlichungstag der Anmeldung: 26.12.2018
(73) Patentinhaber: thyssenkrupp Industrial Solutions AG, 45143 Essen (DE); thyssenkrupp AG, 45143 Essen (DE)
(72) Erfinder: STENDER, Timo, 58730 Fröndenberg (DE); FLASSPÖHLER, Melanie, 44141 Dortmund (DE); WILLMS, Eike, 44309 Dortmund (DE); ROHLOFF, Kathrin, 20457 Hamburg (DE)
(74) Vertreter: thyssenkrupp Intellectual Property GmbH
(86) Internationale Anmeldenummer: PCT/EP2017/053044
(87) Internationale Veröffentlichungsnummer: WO 2017/140597

(56) Entgegenhaltungen:
- DE-A1-102009 022 904
- DE-A1-102009 040 111
- DE-A1-102014 005 508
- GB-A- 2 467 602
- US-A1- 2010 083 878

## Beschreibung

Die Erfindung betrifft eine Anlage mit einer Behandlungsvorrichtung zur mechanischen und/oder thermischen Behandlung eines anorganischen Materials, die Abgas erzeugt, und mit einer in einen Abgasstrang der Behandlungsvorrichtung integrierten ersten Abgasbehandlungsvorrichtung in Form einer Entstickungsvorrichtung. Die Erfindung betrifft weiterhin ein Verfahren zur Behandlung des Abgases einer solchen Anlage.

Eine gattungsgemäße Anlage kommt beispielsweise bei der Herstellung von Zementklinker zum Einsatz.

Zur Minderung der Stickoxide wird das Abgas einer solchen Anlage regelmäßig mittels selektiver katalytischer Reduktion (SCR) oder selektiver nicht-katalytischer Reduktion (SNCR) behandelt. Hierzu wird in das Abgas ein stickstoff- und insbesondere ammoniakhaltiges Reduktionsmittel eingebracht, um die darin enthaltenen Stickoxide, insbesondere NO und NO₂ zu Stickstoff (N₂) und Wasser (H₂O) zu reduzieren. Ohne die Anwesenheit eines Katalysators, d.h. bei einer SNCR, erfordert diese Reaktion eine Abgastemperatur von mindestens 800°C. Zumeist wird diese innerhalb eines Temperaturbereichs zwischen 800°C und 1200°C durchgeführt. Durch die Anwesenheit eines geeigneten Katalysators kann der Temperaturbereich für die Reduktion der Stickoxide auf typischerweise zwischen 180°C und 400°C reduziert werden. Die Kosten für einen solchen Katalysator sind jedoch erheblich und steigen in erheblichem Umfang mit zunehmender Größe des Volumenstroms des zu behandelnden Abgases.

Die SNCR besitzt im Vergleich zur SCR grundsätzlich eine geringere Effizienz. Um die Effizienz einer SNCR zu erhöhen und insbesondere NO_{X}-Minderungsraten von 50% und mehr erreichen zu können, kann vorgesehen sein, das Reduktionsmittel überstöchiometrisch zu dosieren. Dieses führt jedoch zu einer unvollständigen Umsetzung und folglich zu einem sogenannten Schlupf des Reduktionsmittels, so dass dieses am Ende des Abgasstrangs, an dem das Abgas in die Atmosphäre entlassen wird, noch in relevantem Umfang im Abgas vorhanden ist. Dies ist zu vermeiden, weil ammoniakhaltiges Reduktionsmittel selbst als Schadstoff deklariert ist.

Die DE 10 2014 005 508 A1 offenbart ein Verfahren sowie eine Anlage zur Zementklinkerherstellung, wobei das in einem Drehrohrofen anfallende Abgas mittels SNCR entstickt wird, wozu einem Kalzinator ammoniakhaltiges Reduktionsmittel überstöchiometrisch zugeführt wird. Zur Verhinderung von Ammoniakemissionen über das Abgas infolge von bei der SNCR auftretendem Ammoniak-Schlupf ist in dem Abgasstrang stromab des Kalzinators ein Katalysator angeordnet, der dazu dient, den Ammoniak-Schlupf zu reduzieren. Weiterhin ist ein Bypass vorgesehen, über den das Abgas bedarfsweise aufgrund von Wartungen, Reparaturarbeiten oder Funktionsstörungen des Katalysators, unter Umgehung des Katalysators geführt werden kann.

Ausgehend von diesem Stand der Technik lag der Erfindung die Aufgabe zugrunde, auf möglichst einfache und kostengünstige Weise eine ausreichende Minderung von Schadstoffen und insbesondere von Stickoxiden im Abgas einer gattungsgemäßen Anlage zu erreichen.

Diese Aufgabe wird mittels einer Anlage gemäß dem Patentanspruch 1 und mittels eines Verfahrens gemäß dem Patentanspruch 9 gelöst. Vorteilhafte Ausgestaltungen der erfindungsgemäßen Anlage und vorteilhafte Ausführungsformen des erfindungsgemäßen Verfahrens sind Gegenstände der weiteren Patentansprüche und ergeben sich aus der nachfolgenden Beschreibung der Erfindung.

Eine gattungsgemäße Anlage mit einer Behandlungsvorrichtung zur mechanischen und/oder thermischen Behandlung eines anorganischen Materials, die Abgas erzeugt, und mit einer in einen Abgasstrang der Behandlungsvorrichtung integrierten ersten Abgasbehandlungsvorrichtung, die eine Entstickungsvorrichtung umfasst (oder als solche ausgebildet ist), ist erfindungsgemäß durch eine sich in Strömungsrichtung des Abgases an die erste Abgasbehandlungsvorrichtung anschließende zweite Abgasbehandlungsvorrichtung gekennzeichnet, die in einen Bypass zu einem Hauptabschnitt des Abgasstrangs integriert ist, wobei über den die zweite Abgasbehandlungsvorrichtung integrierenden Bypass nur ein Teilstrom des Abgases führbar ist.

Ein erfindungsgemäßes Verfahren zur Behandlung des aus einer Behandlungsvorrichtung zur mechanischen und/oder thermischen Behandlung eines anorganischen Materials stammenden Abgases, bei dem das Abgas zunächst zumindest teilweise in einer ersten Abgasbehandlungsvorrichtung in Form einer Entstickungsvorrichtung behandelt wird, sieht vor, dass zumindest das zuvor in der ersten Abgasbehandlungsvorrichtung behandelte Abgas anschließend, zumindest temporär, teilweise, beispielsweise 10% bis 50%, vorzugsweise 10% bis 30% des Gesamtvolumenstroms, über einen Bypass zu einem Hauptabschnitt des Abgasstrangs geführt wird, wobei das über den Bypass geführte Abgas in einer zweiten Abgasbehandlungsvorrichtung behandelt wird.

Bei dem Material kann es sich insbesondere um ein Material der Grundstoffindustrie, insbesondere einen Grundstoff der Montanindustrie und konkret um Zementklinker, Kalk und/oder ein Mineral handeln.

Bei der Behandlungsvorrichtung kann es sich insbesondere um eine Vorrichtung zum Brennen eines solchen Materials, beispielsweise von Zementklinker oder Kalk, handeln. Diese kann beispielsweise in Form eines Drehrohrofens ausgebildet sein.

Ein Grundgedanke der Erfindung ist, dass in der zweiten Abgasbehandlungsvorrichtung nur ein Teil des Abgases, der auch in der ersten Abgasbehandlungsvorrichtung behandelt wurde, behandelt wird, weil über den die zweite Abgasbehandlungsvorrichtung integrierenden Bypass, möglicherweise kontinuierlich, nur ein Teilstrom geführt wird. Dies ermöglicht eine vorteilhafte Auslegung der zweiten Abgasbehandlungsvorrichtung, weil diese für geringere Volumenströme des Abgases vorgesehen sein kann, und/oder eine relativ lange Betriebslebensdauer aufweisen kann, weil diese mit relativ wenig Abgas beaufschlagt wird. Sofern vorgesehen ist, dass stets lediglich ein Teilstrom des Abgases über den Bypass und damit die zweite Abgasbehandlungsvorrichtung geführt wird, kann für eine erfindungsgemäße Anlage vorzugsweise vorgesehen sein, dass der Bypass und die zweite Abgasbehandlungsvorrichtung lediglich zur Leitung eines geringeren maximalen Volumenstroms des Abgases als ein die erste Abgasbehandlungsvorrichtung integrierender Abschnitt des Abgasstrangs ausgelegt ist. Dadurch werden die Herstellungskosten für den Bypass und insbesondere die zweite Abgasbehandlungsvorrichtung gering gehalten.

Eine erfindungsgemäße Anlage sowie ein erfindungsgemäßes Verfahren ermöglichen in vorteilhafter Weise, das Abgas vollständig oder zum größten Teil, z.B. zu mindestens 90%, in der ersten Abgasbehandlungsvorrichtung auf relativ kostengünstige Weise mittels selektiver nicht-katalytischer Reduktion (SNCR) zu behandeln, vorzugsweise bei einer Abgastemperatur zwischen 800°C und 1200°C, besonders bevorzugt zwischen 850°C und 1000°C, wozu die erste Abgasbehandlungsvorrichtung eine entsprechende SNCR-Entstickungsvorrichtung umfassen oder als eine solche ausgebildet sein kann. Die relativ geringe Effizienz, die bei einer Entstickung mittels SNCR regelmäßig nur zu erreichen ist, kann durch die zusätzliche Abgasbehandlung in der zweiten Abgasbehandlungsvorrichtung verbessert werden. Dabei kann insgesamt eine ausreichende Entstickung erreicht werden, auch wenn zumindest temporär nur ein Teil des Abgases der zweiten Abgasbehandlungsvorrichtung zugeführt wird.

Insbesondere wegen der erfindungsgemäß ermöglichten relativ kleinen Dimensionierung kann die zweite Abgasbehandlungsvorrichtung in vorteilhafter Weise als eine SCR-Entstickungsvorrichtung (ggf. umfassend) ausgebildet sein. Eine Behandlung des Abgases in der zweiten Abgasbehandlungsvorrichtung mittels SCR kann vorzugsweise bei einer Abgastemperatur zwischen 180°C und 400°C, besonders bevorzugt zwischen 280°C und 380° und insbesondere zwischen 300°C und 370°C erfolgen. Vorteilhaft an einer solchen SCR-Entstickungsvorrichtung kann insbesondere der erzielbare hohe Wirkungsgrad bei der Entstickung des durch diese behandelten Abgases sein. Eine solche Ausgestaltung kann demnach insbesondere dann sinnvoll sein, wenn mittels der zweiten Abgasbehandlungsvorrichtung ebenfalls eine Entstickung des Abgases erfolgen soll.

Dies ist jedoch nicht zwingend erforderlich. Vielmehr kann die zweite Abgasbehandlungsvorrichtung auch primär oder ausschließlich dafür vorgesehen sein, ein Reduktionsmittel zu binden oder umzuwandeln, das als sogenannter Schlupf der ersten Abgasbehandlungsvorrichtung in der zweiten Abgasbehandlungsvorrichtung ankommt, da dieses dem Abgas für die Behandlung in der ersten Abgasbehandlungsvorrichtung überstöchiometrisch zugesetzt wurde. Auf diese Weise kann für die erste Abgasbehandlungsvorrichtung, die insbesondere in Form einer SNCR-Entstickungsvorrichtung ausgebildet sein kann, ein relativ hoher Entstickungswirkungsgrad realisiert werden, wobei ein Schlupf des Reduktionsmittels zumindest teilweise durch die zweite Abgasbehandlungsvorrichtung reduziert wird, so dass das Abgas stromab der zweiten Abgasbehandlungsvorrichtung nicht nur in einem ausreichenden Maße entstickt ist, sondern das Reduktionsmittel auch nur noch in einem ausreichend geringen Maße enthält.

Eine überstöchiometrische Dosierung des Reduktionsmittels muss nicht ausschließlich in einem hierfür vorgesehenen Einbringen eines Reduktionsmittels in das Abgas, das insbesondere stromauf oder in der ersten Abgasbehandlungsvorrichtung erfolgen kann, begründet sein. Vielmehr können in dem zu behandelnden Material auch stickstoff- beziehungsweise ammoniakhaltige Verbindungen enthalten sein, die im Rahmen der Behandlung des Materials freigesetzt werden und dadurch in dem Abgas enthalten sind. Diese in Verbindung mit einem zusätzlich in das Abgas eingebrachten Reduktionsmittel können ebenfalls zu einer entsprechenden überstöchiometrischen Dosierung des Reduktionsmittels (erfindungsgemäß als Gesamtmenge der reduzierend wirkenden Verbindungen verstanden) führen.

Insbesondere dann, wenn mittels der zweiten Abgasbehandlungsvorrichtung primär ein Binden oder Umwandeln von Reduktionsmittel erreicht werden soll, kann vorgesehen sein, dass diese, gegebenenfalls auch ausschließlich, eine Adsorptionsvorrichtung, die insbesondere Aktivkohle umfassen kann, und/oder eine Absorptionsvorrichtung (z.B. einen Wäscher) umfassen kann, durch die das Reduktionsmittel gebunden und dadurch aus dem Abgas entfernt werden kann.

In einer bevorzugten Ausgestaltung der erfindungsgemäßen Anlage kann vorgesehen sein, dass eine der Behandlungsvorrichtung bezüglich des Materialstroms vorgeschaltete Mühle für das Material derart in den Abgasstrang integriert ist, dass mittels eines durch die Mühle geführten Abgasstroms ein Vorwärmen und/oder Trocknen des Materials erfolgen kann. Mittels eines solchen, nachfolgend auch als Verbundbetrieb bezeichneten Betriebs der Anlage wird ermöglicht, noch in dem Abgas enthaltene Wärmeenergie in vorteilhafter Weise auf das anschließend der Behandlungsvorrichtung zuzuführenden Material zu übertragen, wodurch der Energieverbrauch für die mechanische und/oder thermische Behandlung reduziert werden kann.

Problematisch dabei kann die Ausbildung sogenannter Schadstoffkreisläufe sein, die sich daraus ergeben können, dass sich in dem Abgas enthaltene Schadstoffe bei der Durchströmung des Materials in der Mühle infolge der dabei auftretenden Temperaturabsenkung an den Partikeln des Materials anlagern und mit diesen wieder in die Behandlungsvorrichtung gelangen. Es ist bekannt, einen solchen Schadstoffkreislauf zu entlasten, indem eine entsprechende Anlage temporär derart betrieben wird (nachfolgend auch als Direktbetrieb bezeichnet), dass die Mühle umgangen oder das Abgas zumindest nicht dazu genutzt wird, das der Behandlungsvorrichtung zuzuführenden Material vorzuwärmen und/oder zu trocknen. Ein solcher Direktbetrieb, der beispielsweise auch dann vorgesehen sein kann, wenn die Mühle zu beispielsweise Wartungszwecken, die vergleichsweise häufig erfolgen müssen, abgeschaltet wird, führt jedoch grundsätzlich zu erhöhten Schadstoffkonzentrationen im Abgas stromab der Mühle.

In einer bevorzugten Weiterbildung einer solchen erfindungsgemäßen Anlage kann vorgesehen sein, dass die Mühle in den Hauptabschnitt des Abgasstrangs oder stromab des Hauptabschnitts in den Abgasstrang integriert ist, weil auf diese Weise mittels des Bypasses zu dem Hauptabschnitt und/oder mittels der in den Bypass integrierten zweiten Abgasbehandlungsvorrichtung eine gegebenenfalls auch kontinuierliche Entlastung des Schadstoffkreislaufs realisiert werden kann. Eine entsprechende Ausführungsform des erfindungsgemäßen Verfahrens sieht vor, dass das durch den Hauptabschnitt und/oder den Bypass geführte Abgas beziehungsweise die Abgasströmung der beiden wieder zusammengeführten Teilströme zumindest temporär zum Vorwärmen und/oder Trocknen des anschließend der Behandlungsvorrichtung zuzuführenden Materials genutzt wird.

Ist die Mühle dabei in den Hauptabschnitt des Abgasstrangs integriert, wird zumindest ein Teil des Abgases an der Mühle vorbei geführt, so dass die darin enthaltenen Schadstoffe, insbesondere auch ein in der ersten Abgasbehandlungsvorrichtung nicht umgesetztes Reduktionsmittel, sich nicht an dem in der Mühle vorzuwärmenden und/oder zu trocknenden Material anlagern und daher auch nicht wieder mit diesem in die Behandlungsvorrichtung gelangen können. Gleichzeitig wird dieser Teil des Abgases durch die zweite Abgasbehandlungsvorrichtung geführt, so dass die erzielbare Entlastung des Schadstoffkreislaufs nicht mit einer Erhöhung der Schadstoffkonzentration im in die Atmosphäre entlassenen Abgas einhergehen muss.

In einer bevorzugten Ausführungsform des erfindungsgemäßen Verfahren kann dann noch vorgesehen sein, dass eine Verteilung des Abgases auf den Hauptabschnitt und den Bypass in Abhängigkeit von einem Wärmeenergiebedarf für das Vorwärmen und/oder Trocknen des Materials in der Mühle erfolgt, wobei besonders bevorzugt der über den Hauptabschnitt geführte Teilstrom des Abgases lediglich so groß gewählt wird, dass der Wärmeenergiebedarf hierfür gedeckt ist. Auf diese Weise kann trotz ausreichender Vorwärmung und/oder Trocknung des Materials in der Mühle eine möglichst große Entlastung des Schadstoffkreislaufs realisiert werden.

Eine entsprechende Auslegung der erfindungsgemäßen Anlage und konkret des Abgasstrangs, durch die die vorgesehene Verteilung des Abgases auf den Hauptabschnitt und den Bypass erreicht werden soll, kann unveränderlich vorgesehen und somit insbesondere durch eine entsprechende Dimensionierung des Hauptabschnitts sowie des diesen umgehenden Bypasses hinsichtlich des durch diese jeweils maximal leitbaren Volumenstroms des Abgases realisiert sein. Dabei müsste für die Auslegung eine Abschätzung des Wärmeenergiebedarfs eines als Normalbetrieb definierten Betriebs vorgenommen werden.

Alternativ dazu kann jedoch auch vorgesehen sein, dass die Verteilung des Abgases auf einerseits den Hauptabschnitt und andererseits den Bypass mittels einer Verteilvorrichtung veränderbar ist. Dies kann insbesondere dazu genutzt werden, die Verteilung in Abhängigkeit von einem tatsächlichen, ggf. schwankenden Wärmeenergiebedarf für das Vorwärmen und/oder Trocknen des Materials zu steuern oder zu regeln.

Mittels einer solchen Verteilvorrichtung kann auch eine Verteilung des Abgases vorgesehen sein, bei der temporär der gesamte Abgasstrom über entweder den Hauptabschnitt oder den Bypass geführt wird. Dies kann beispielsweise dazu dienen, in einem Verbundbetrieb das gesamte Abgas über die Mühle zu führen, wobei es infolge einer Anlagerung der Schadstoffe, insbesondere eines in der ersten Abgasbehandlungsvorrichtung nicht umgesetzten Reduktionsmittels, an dem Material in der Mühle zu einer Abgasbehandlung und damit einem relativ geringen Schadstoffgehalt stromab der Mühle kommt. Andererseits kann das Abgas dann auch temporär zur Realisierung eines Direktbetriebs vollständig über den Bypass geführt werden, wodurch ein sich im Verbundbetrieb ausbildender Schadstoffkreislauf entlastet und gleichzeitig infolge der Wirkung der in den Bypass integrierten zweiten Abgasbehandlungsvorrichtung eine Behandlung des Abgases erfolgen kann.

Ist die Mühle dagegen stromab des Hauptabschnitts und damit auch des Bypasses in den Abgasstrang integriert, kann Wärmeenergie, die in dem über den Bypass geführten Abgas(teil)strom enthalten ist, in vorteilhafter Weise ebenfalls für ein Vorwärmen und/oder Trocknen des Materials in der Mühle genutzt werden, wobei gleichzeitig wiederum eine Entlastung des Schadstoffkreislaufs realisiert werden kann, weil Schadstoffe in diesem Abgas(teil)strom und insbesondere ein in der ersten Abgasbehandlungsvorrichtung nicht umgesetztes Reduktionsmittel vorab über die zweite Abgasbehandlungsvorrichtung geführt wurde, in der diese zumindest teilweise gebunden oder umgewandelt wurden.

Trotz der Möglichkeit, einen Schadstoffkreislauf zu entlasten, indem zumindest ein Teil des Abgases über den Bypass an der Mühle vorbei und dabei über die zweite Abgasbehandlungsvorrichtung zur Bindung und Umwandlung von Schadstoffen geführt wird, kann in einer bevorzugten Ausgestaltung der erfindungsgemäßen Anlage vorgesehen sein, dass die Mühle deaktivierbar und/oder, zusätzlich zu einer möglichen Umgehung mittels des die zweite Abgasbehandlungsvorrichtung umfassenden Bypasses, umgehbar ausgebildet ist. Eine solche Ausgestaltung kann insbesondere dann sinnvoll sein, wenn der die zweite Abgasbehandlungsvorrichtung umfassende Bypass lediglich so ausgelegt ist, dass dieser maximal einen Teilstrom des Abgases leiten kann. Als "deaktivierbar" wird dabei verstanden, dass eine Durchströmung zumindest eines Flusses des Materials durch das Abgas verhindert werden kann.

In einer konstruktiv besonders einfachen Ausgestaltung der erfindungsgemäßen Anlage kann die zweite Abgasbehandlungsvorrichtung auch von dem Bypass selbst ausgebildet werden, wenn in einer bevorzugten Ausführungsform des erfindungsgemäßen Verfahrens vorgesehen ist, dass das Abgas mit einer Temperatur von ≤ 150°C, vorzugsweise von ≤ 120°C und besonders bevorzugt von ≤ 100°C durch den Bypass geführt wird. Bei so geringen Temperaturen kann im relevanten Ausmaß eine Adsorption von Schadstoffen und insbesondere von noch im Abgas enthaltenem Reduktionsmittel (Schlupf) an im Abgas enthaltenem Staub erreicht werden. Dieser Staub kann dann vorzugsweise in einer dem Bypass nachgeschalteten Entstaubungsvorrichtung (die vorzugsweise grundsätzlich vorgesehen sein kann) abgeschieden und entsorgt beziehungsweise aus dem Prozess ausgeschleust werden oder direkt in den heißen Teil der Anlage zurückgeführt werden, bei denen das sich wieder freisetzende Reduktionsmittel mit Stickoxiden reagiert. Zum Erreichen derart geringer Abgastemperaturen kann die erfindungsgemäße Anlage gegebenenfalls eine Kühlvorrichtung zur aktiven Kühlung des Abgases aufweisen. Eine solche Kühlvorrichtung kann dabei in vorteilhafter Weise in den Bypass integriert sein, so dass durch diese lediglich die Temperatur des über den Bypass geführten Teilstroms des Abgases beeinflusst wird.

In einer weiterhin bevorzugten Ausgestaltung einer erfindungsgemäßen Anlage kann noch eine zwischen der Behandlungsvorrichtung und der ersten Abgasbehandlungsvorrichtung aus dem Abgasstrang abgehende Umgehungsleitung für einen Teilstrom des Abgases, beispielsweise maximal 30%, vorzugsweise 3% bis 30% und besonders bevorzugt 5% bis 10% des Gesamtvolumenstroms an der Abzweigung, vorgesehen sein. Eine solche Umgehungsleitung kann insbesondere dazu dienen, einen Schadstoffkreislauf zu entlasten, der sich insbesondere bei einer Ausgestaltung der erfindungsgemäßen Anlage, bei der zusätzlich ein Materialvorwärmer in den Abgasstrang integriert ist, wobei dieser der Behandlungsvorrichtung bezüglich der Richtung des Materialflusses vorgeschaltet ist, ausbilden kann. Dabei werden Schadstoffe, beispielsweise Chlor, die in dem aus der Behandlungsvorrichtung entlassenen Abgas noch im gasförmigen Zustand vorhanden sind, bereits in dem Materialvorwärmer an dem Material angelagert und mit diesem wieder in die Behandlungsvorrichtung rückgeführt.

Bei einer solchen Ausgestaltung einer erfindungsgemäßen Anlage kann weiterhin bevorzugt vorgesehen sein, dass die Umgehungsleitung vorzugsweise stromauf der zweiten Abgasbehandlungsvorrichtung in den Bypass mündet, wodurch erreicht werden kann, dass der über die Umgehungsleitung geführte und damit in der ersten Abgasbehandlungsvorrichtung nicht behandelte Teilstrom des Abgases zumindest in der zweiten Abgasbehandlungsvorrichtung behandelt wird. Eine entsprechende Ausführungsform eines erfindungsgemäßen Verfahrens sieht vor, dass ein Teilstrom des Abgases zwischen der Behandlungsvorrichtung und der ersten Abgasbehandlungsvorrichtung aus dem Abgasstrang abgezweigt und vorzugsweise stromauf der zweiten Abgasbehandlungsvorrichtung in den Bypass geführt wird.

In einer insbesondere konstruktiv vorteilhaften Ausgestaltung einer erfindungsgemäßen Anlage kann noch vorgesehen sein, dass die erste Abgasbehandlungsvorrichtung in den Materialvorwärmer integriert ist. Die Verwendung unbestimmter Artikel ("ein", "einer", "eines", etc.), insbesondere in den Patentansprüchen und dem diese erläuternden Teil der Beschreibung, ist als solche und nicht als Verwendung von Zahlwörtern zu verstehen. Diese Verwendung ist somit so zu verstehen, dass die damit gekennzeichneten Elemente mindestens einmal vorhanden sind und mehrmals vorhanden sein können.

Die Erfindung wird nachfolgend anhand von in den Zeichnungen dargestellten Ausführungsbeispielen näher erläutert. In den Zeichnungen zeigt, jeweils in einer schematischen Darstellung:
- Fig. 1:: eine erste Ausgestaltung einer erfindungsgemäßen Anlage; und
- Fig. 2:: eine zweite Ausgestaltung einer erfindungsgemäßen Anlage.

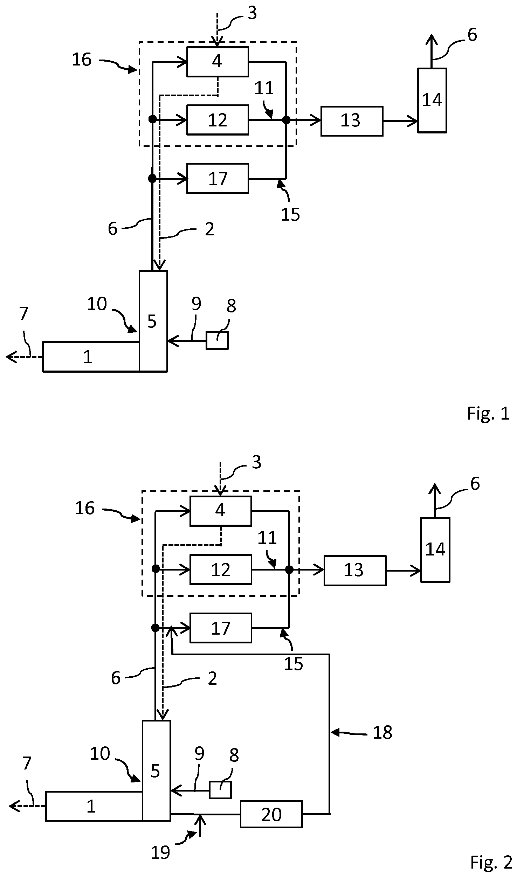

Die Fig. 1 zeigt in schematischer Darstellung eine erste Ausführungsform einer erfindungsgemäßen Anlage. Diese dient beispielsweise der Herstellung von Zementklinker, der in einer Behandlungsvorrichtung 1 der Anlage, die in Form eines Drehrohrofens 1 ausgebildet ist, aus Zementrohmehl 2, gebrannt wird.

Das zuvor durch Mahlen von Rohmaterialien 3 in einer Mühle 4 hergestellte Zementrohmehl 2 wird zunächst, bzw. ggf. unter Zwischenschaltung eines Silos, in einen dem Drehrohrofen 2 bezüglich der Flussrichtung des Zementrohmehls 2 vorgeschalteten Materialvorwärmer 5 geführt. Dieser ist beispielsweise in Form eines mehrstufigen Zyklonvorwärmers (optional mit integriertem Kalzinator) ausgebildet. In einem solchen Zyklonvorwärmer wird das Zementrohmehl 2 in mehreren Stufen von dem aus dem Drehrohrofen 1 stammenden Abgas 6 durchströmt und mitgerissen und anschließend in einem Zyklon der jeweiligen Vorwärmerstufe zumindest teilweise wieder aus dem Abgasstrom separiert. Der Zyklonvorwärmer kann dabei einen vertikalen Aufbau aufweisen, so dass das Zementrohmehl 2, soweit es von dem Abgasstrom mitgerissen wird, primär entgegen der Schwerkraftrichtung bewegt wird und nach der Separierung in den Zyklonen schwerkraftbedingt zur jeweils nächsten Vorwärmerstufe fällt. Andere übliche Arten von Materialvorwärmern 5, wie beispielsweise gestufte Verweilzeitreaktoren, sind ebenfalls möglich.

Aus dem Materialvorwärmer 5 gelangt das vorgewärmte und gegebenenfalls vorkalzinierte Zementrohmehl 2, dann auch als Ofenmehl bezeichnet, in den Drehrohrofen 1, in dem dieses zu Zementklinker 7 gebrannt wird.

Da das aus dem Drehrohrofen 1 stammende Abgas 6 schlussendlich in die Atmosphäre entlassen wird, ist es erforderlich, dieses zumindest so weit zu behandeln, dass geltende Abgasgesetzgebungen erfüllt werden. Dabei ist insbesondere eine Entstickung, d.h. eine Reduzierung der in dem Abgas 6 enthaltenen Stickoxide erforderlich. Dies erfolgt bei der Anlage gemäß der Fig. 1 (und auch bei derjenigen gemäß der Fig. 2) zum einen mittels einer selektiven nichtkatalytischen Reduktion (SNCR), wozu in den gesamten Strom des Abgases 6 in einem Anfangsabschnitt des Materialvorwärmers 5, bezogen auf die Strömungsrichtung des Abgases 6, mittels einer Dosiervorrichtung 8 ein Reduktionsmittel 9, beispielsweise Ammoniumhydroxid oder Harnstoff, eingebracht wird, wodurch die in dem Abgas 6 enthaltenen Stickoxide mit dem ammoniakhaltigen Reduktionsmittels teilweise zu Stickstoff und Wasser reduziert werden. Hierzu ist ohne die Anwesenheit eines Katalysators eine Abgastemperatur von mindestens 800°C erforderlich, die in einem Anfangsabschnitt des Materialvorwärmers 5 noch vorliegt, weil das Abgas 6 den Drehrohrofen 1 mit einer Temperatur von typischerweise ca. 1000°C verlässt. Infolge des Wärmeübergangs von dem Abgas 6 auf das Zementrohmehl 2 in dem Materialvorwärmer 5 kühlt das Abgas relativ schnell auf eine Temperatur unterhalb von 800°C ab. Wird diese Grenztemperatur deutlich unterschritten, erfolgt keine selektive nicht-katalytische Reduktion der Stickoxide mehr, obwohl gegebenenfalls noch Reduktionsmittel 9 in erheblichem Umfang im Abgas enthalten ist. In der Regel lässt sich infolge der vergleichsweise schnellen Abkühlung des Abgases 6 in dem Materialvorwärmer 5 mit einer solchen, durch das Vorsehen der Dosiervorrichtung 8 in den Materialvorwärmer 5 integrierten SNCR-Entstickungsvorrichtung 10 lediglich ein Entstickungswirkungsgrad erreichen, der nicht deutlich über 50% liegt. Und selbst zum Erreichen eines Entstickungswirkungsgrads von 50% ist es in der Regel erforderlichen, das Reduktionsmittel 9 überstöchiometrisch in dem Abgas 6 zu dosieren; d.h. es wird so viel Reduktionsmittel 9 eingebracht, dass in dem Abgas 6 mehr enthalten ist, als chemisch für die insgesamt mittels SNCR angestrebte Reduzierung erforderlich ist. Dabei muss die überstöchiometrische Dosierung nicht ausschließlich in dem Einbringen des Reduktionsmittels 9 mittels der Dosiervorrichtung 8 begründet sein. Vielmehr können reduzierend wirkende Verbindungen auch beim Brennen des Zementklinker 7 in dem Drehrohrofen 1 oder auch schon beim Vorwärmen des Zementrohmehls 2 in dem Materialvorwärmer 5 aus dem Material freigesetzt werden, die in Verbindung mit dem eingebrachten Reduktionsmittel 9 zu der überstöchiometrischen Dosierung führen. Infolge der überstöchiometrischen Dosierung ergibt sich ein sogenannter Schlupf des Reduktionsmittels 9, so dass in dem den Materialvorwärmer 5 verlassenden Abgas 6 noch relevante Mengen des Reduktionsmittels 9, beziehungsweise der Gesamtheit an reduzieren wirkenden Verbindungen, enthalten sind. Da das Reduktionsmittel 9 beziehungsweise die reduzierend wirkenden Verbindungen ebenfalls als Schadstoffe deklariert sind, sollte möglichst weitgehend vermieden werden, dass diese in die Atmosphäre entlassen werden.

Typischerweise verlässt das Abgas 6 den Materialvorwärmer 5 einer solchen Anlage mit einer Abgastemperatur von zwischen 250°C und 400°C. Dieser Abgastemperaturbereich ist ausreichend hoch, um zum einen für ein erstes Vorwärmen und insbesondere auch Trockenen des Zementrohmehls 2 in der Mühle 4 genutzt zu werden, wozu dieses zumindest temporär während eines sogenannten Verbundbetriebs der Anlage durch die Mühle 4 geführt wird, wobei es das Zementrohmehl 2 durchströmt. Dabei kühlt sich das Abgas 6 so weit ab, dass es zu einer Anlagerung von Schadstoffen und insbesondere auch von infolge des Schlupfs in der ersten Abgasbehandlungsvorrichtung (SNCR-Entstickungsvorrichtung) 10 noch in dem Abgas 6 enthaltenem Reduktionsmittel 9 an den Partikeln des Zementrohmehls 2 kommt, wobei die Schadstoffe mit dem Zementrohmehl 2 wieder dem Materialvorwärmer 5 und anschließend dem Drehrohrofen 1 zugeführt werden, wo sie infolge der dort herrschenden Temperaturen wieder verflüchtigt und als Abgas 6 wieder abgeführt werden. Somit stellt sich ein Schadstoffkreislauf ein, der gezielt entlastet werden muss, um ein stetiges Ansteigen des Schadstoffgehalts zu vermeiden. Hierzu kann bei einer gattungsgemäßen ebenso wie bei einer erfindungsgemäßen Anlage, wie sie beispielsweise in der Fig. 1 oder der Fig. 2 dargestellt ist, ein Teil des Abgases 6 oder auch das gesamte Abgas 6 in einem als Direktbetrieb bezeichneten Betrieb über (ggf. u.a.) eine Umgehung 11 an der Mühle 4 vorbeigeführt werden. Dies kann neben dem Ziel einer Entlastung des Schadstoffkreislaufs insbesondere auch dann erfolgen, wenn die Mühle 4 zu beispielsweise Wartungszwecken, die vergleichsweise häufig erfolgen müssen, abgeschaltet ist, so dass während dieser Wartungsarbeiten ein Betrieb der Anlage insgesamt weiterhin möglich ist. In die Umgehung 11 ist eine Kühlvorrichtung 12 (Kühlturm) integriert, mittels der das über diese geführte Abgas 6 so weit abgekühlt wird, dass die Abgastemperatur beim Eintritt in eine nachgeschaltete (erste) Entstaubungsvorrichtung 13, zum Beispiel ein Entstaubungsfilter oder ein Entstaubungszyklon, unterhalb einer maximal für diese vorgesehenen Betriebstemperatur, beispielsweise ca. 100°C, liegt. Das in der (ersten) Entstaubungsvorrichtung 13 entstaubte Abgas 6 kann anschließend über einen Kamin 14 in die Atmosphäre entlassen werden.

Die Temperatur des den Materialvorwärmer 5 verlassenden Abgases 6, die typischerweise zwischen 250 °C und 400 °C liegt, ist weiterhin ausreichend hoch, um eine zusätzliche Entstickung mittels selektiver katalytischer Reduktion (SCR) zu realisieren, weil der dabei eingesetzte Katalysator die erforderliche Reaktionstemperatur entsprechend absenkt. Erfindungsgemäß ist daher ein Bypass 15 zu einem Hauptabschnitt 16 des Abgasstrangs der Anlage vorgesehen, wobei dieser Hauptabschnitt 16 von den zwei parallel verlaufenden Abschnitten, die einerseits die Mühle 4 und andererseits die Kühlvorrichtung 12 integrieren, ausgebildet ist. In diesen Bypass 15 ist eine zweite Abgasbehandlungsvorrichtung 17 in Form einer SCR-Entstickungsvorrichtung 17 integriert. Im Betrieb der Anlage wird stets ein Teilstrom des aus dem Materialvorwärmer 5 ausgetretenen Abgases 6 über den Bypass 15 und damit die SCR-Entstickungsvorrichtung 17 geführt, wobei für diesen Teilstrom des Abgases 6 eine zusätzliche Entstickung erreicht wird. Dadurch wird in diesem Teilstrom des Abgases 6 (und in reduziertem Maße auch des gesamten, in die Atmosphäre entlassenen Abgases 6) nicht nur die Konzentration an Stickoxiden weiter reduziert, sondern auch die Konzentration des infolge des Schlupfs in der ersten Abgasbehandlungsvorrichtung 10 noch in dem Abgas 6 enthaltenen Reduktionsmittels 9.

Insbesondere während des deutlich häufiger und auch länger andauernden Verbundbetriebs (im Vergleich zum Direktbetrieb) kann durch die erfindungsgemäße Ausgestaltung der Anlage auf relativ kostengünstige Weise eine relativ gute Schadstoffminderung und insbesondere Entstickung des in die Atmosphäre entlassenen Abgases 6 erreicht werden. Die wesentlichen Gründe dafür sind folgende:
- Eine Entstickung mittels der als SNCR-Entstickungsvorrichtung 10 ausgebildeten ersten Abgasbehandlungsvorrichtung 10 ist kostengünstig umsetzbar und infolge der ermöglichten überstöchiometrischen Dosierung des Reduktionsmittels 9 kann mittels dieser auch ein relativ großer Entstickungswirkungsgrad von 50% und mehr realisiert werden.
- Das infolge des Schlupfs in der SNCR Entstickungsvorrichtung 10 noch in dem Abgas 6 enthaltene Reduktionsmittel 9 kann im Verbundbetrieb im relevanten Umfang einerseits durch eine Anlagerung an dem Zementrohmehl 2 in der Mühle 4 aus dem entsprechenden Teilstrom des Abgases 6 entfernt werden.
- Andererseits kann das noch in dem über den Bypass 15 und die SCR-Entstickungsvorrichtung 17 geführten Teilstrom des Abgases 6 enthaltene Reduktionsmittel 9 für eine zusätzliche Entstickung des Abgases 6 dieses Teilstroms genutzt werden, wobei es gleichzeitig im relevanten Umfang umgesetzt und damit eliminiert wird.
- Gleichzeitig wird infolge der Führung eines Teilstroms des Abgases 6 über den Bypass 15 dauerhaft eine Entlastung des infolge einer Anlagerung von Schadstoffen an dem Zementrohmehl 2 in der Mühle 4 ausgebildeten Schadstoffkreislaufs erreicht, wobei diese Entlastung infolge der Integration der SCR-Entstickungsvorrichtung 17 in den die Entlastung bewirkenden Bypass 15 zumindest nicht mit einer erhöhten Konzentration des Reduktionsmittels 9 in dem in die Atmosphäre entlassenen Abgas 6 verbunden ist.

Ein Schadstoffkreislauf kann sich nicht nur infolge einer Anlagerung von Schadstoffen an den Partikeln des Zementrohmehls 2 in der Mühle 4 ergeben, sondern ebenfalls auch durch eine entsprechende Anlagerung an den Partikeln des Zementrohmehls 2 in dem Materialvorwärmer 5. Dies gilt beispielsweise für Chlor, das sich bereits bei entsprechend hohen Abgastemperaturen anlagert. Um auch einen solchen Schadstoffkreislauf zu entlasten, kann gemäß der in der Fig. 2 dargestellten Anlage noch eine Umgehungsleitung 18 vorgesehen sein, durch die in einem Anfangsabschnitt und insbesondere noch stromauf der Stelle, an der das Reduktionsmittel 9 in das Abgas 6 eingebracht wird, ein Teilstrom des Abgases 6 abgezweigt wird, damit dieser Teilstrom des Abgases 6 nicht zur Vorwärmung des Zementrohmehls 2 genutzt wird. Dieser Teilstrom des Abgases 6 kann beispielsweise ca. 10% des Volumenstroms des den Drehrohrofen 1 verlassenden Abgases 6 und damit gegebenenfalls auch des Gesamtvolumenstroms darstellen. Gegebenenfalls kann jedoch zwischen dem Drehrohrofen 1 (und ggf. auch der Abzweigung der Umgehungsleitung 18) einerseits und dem Materialvorwärmer 5 andererseits auch noch in üblicher Weise ein nicht dargestellter Kalzinator vorgesehen sein, in dem zudem eine Brennstoffzufuhr integriert sein kann, so dass durch diesen ein Zusatzvolumenstrom von Abgas 6 erzeugt wird, das den Gesamtvolumenstrom an Abgas 6 der Anlage erhöht.

Bei der erfindungsgemäßen Anlage gemäß der Fig. 2 ist vorgesehen, diesen Teilstrom des Abgases 6 stromauf der zweiten Abgasbehandlungsvorrichtung (SCR-Entstickungsvorrichtung) 17 in den Bypass 15 zu überführen, wobei dieser vorab über eine (zweite) Kühlvorrichtung 19, die beispielsweise als sogenannte Luftquenche ausgeführt sein kann, in der dem Abgas 6 relativ kühle Luft zugeführt wird, sowie eine (zweite) Entstaubungsvorrichtung 20 geführt werden kann, so dass Chloralkali-Verbindungen, die den Katalysator der SCR-Entstickungsvorrichtung 17 relativ schnell deaktivieren können, vorher abgeschieden werden. Infolge der Mündung der Umgehungsleitung 18 in den Bypass 15 stromauf der zweiten Abgasbehandlungsvorrichtung (SCR-Entstickungsvorrichtung) 17 kann für den darüber geführten Teilstrom des Abgases 6, der die erste Abgasbehandlungsvorrichtung (SNCR-Entstickungsvorrichtung) 10 nicht durchläuft, eine Entstickung mittels der zweiten Abgasbehandlungsvorrichtung (SCR-Entstickungsvorrichtung) 17 realisiert werden, was sich wiederum positiv auf die Stickoxidkonzentration in dem in die Atmosphäre entlassenen Abgas 6 auswirkt. Für eine Entstickung dieses Teilstroms des Abgases 6 der zweiten Abgasbehandlungsvorrichtung (SCR-Entstickungsvorrichtung) 17 kann in diesen ein Reduktionsmittel über eine (nicht dargestellte) zusätzliche Dosiervorrichtung eingebracht werden oder die Umgehungsleitung 18 geht erst stromab bezüglich der Strömungsrichtung des Abgases der Dosiervorrichtung 8 aus dem Materialvorwärmer 5 ab. Die Temperatur des über die Umgehungsleitung 18 geführten Teilstroms des Abgases 6 kann beim Eintritt in den Bypass 15 beispielsweise zwischen 100°C und 800°C, vorzugsweise zwischen 150°C und 600°C und besonders bevorzugt zwischen 200°C und 400°C betragen.

### Bezugszeichen:

- 1.: Behandlungsvorrichtung / Drehrohrofen
- 2.: Zementrohmehl
- 3.: Rohmaterialien
- 4.: Mühle
- 5.: Materialvorwärmer
- 6.: Abgas
- 7.: Zementklinker
- 8.: Dosiervorrichtung
- 9.: Reduktionsmittel
- 10.: erste Abgasbehandlungsvorrichtung / SNCR-Entstickungsvorrichtung
- 11.: Umgehung
- 12.: (erste) Kühlvorrichtung
- 13.: (erste) Entstaubungsvorrichtung
- 14.: Kamin
- 15.: Bypass
- 16.: Hauptabschnitt des Abgasstrangs
- 17.: zweite Abgasbehandlungsvorrichtung / SCR-Entstickungsvorrichtung
- 18.: Umgehungsleitung
- 19.: (zweite) Kühlvorrichtung
- 20.: (zweite) Entstaubungsvorrichtung

## Patentansprüche

1. Anlage mit einer Behandlungsvorrichtung (1) zur mechanischen und/oder thermischen Behandlung eines anorganischen Materials, die Abgas (6) erzeugt, mit einer in einen Abgasstrang für die Behandlungsvorrichtung (1) integrierten ersten Abgasbehandlungsvorrichtung (10), die eine Entstickungsvorrichtung umfasst, und mit einer sich in Strömungsrichtung des Abgases (6) an die erste Abgasbehandlungsvorrichtung (10) anschließenden zweiten Abgasbehandlungsvorrichtung (17), die in einen Bypass (15) zu einem Hauptabschnitt (16) des Abgasstrangs integriert ist, **gekennzeichnet durch** eine Ausgestaltung derart, dass über den Bypass (15) nur ein Teilstrom des Abgases führbar ist.

2. Anlage gemäß Anspruch 1, **dadurch gekennzeichnet, dass** eine der Behandlungsvorrichtung (1) bezüglich des Materialflusses vorgeschaltete Mühle (4) für das Material derart in den oder stromab des Hauptabschnitts (16) des Abgasstrang integriert ist, dass mittels eines durch die Mühle (4) geführten Abgasstroms ein Vorwärmen und/oder Trocknen des Materials erfolgen kann.

3. Anlage gemäß einem der vorhergehenden Ansprüche, **dadurch gekennzeichnet, dass** die erste Abgasbehandlungsvorrichtung (10) eine SNCR-Entstickungsvorrichtung (10) umfasst.

4. Anlage gemäß einem der vorhergehenden Ansprüche, **dadurch gekennzeichnet, dass** die erste Abgasbehandlungsvorrichtung (10) eine Dosiervorrichtung (8) zum Einbringen eines Reduktionsmittels (9) in das Abgas (6) und die zweite Abgasbehandlungsvorrichtung (17) eine Vorrichtung zur Bindung oder Umwandlung des Reduktionsmittels (9) umfasst.

5. Anlage gemäß einem der vorhergehenden Ansprüche, **dadurch gekennzeichnet, dass** die zweite Abgasbehandlungsvorrichtung (17) eine SCR-Entstickungsvorrichtung (17) und/oder eine Adsorptionsvorrichtung und/oder eine Absorptionsvorrichtung umfasst.

6. Anlage gemäß einem der vorhergehenden Ansprüche, **dadurch gekennzeichnet, dass** die Verteilung des Abgases (6) auf einerseits den Hauptabschnitt (16) und andererseits den Bypass (15) mittels einer Verteilvorrichtung veränderbar ist.

7. Anlage gemäß einem der vorhergehenden Ansprüche, **gekennzeichnet durch** einen in den Abgasstrang integrierten Materialvorwärmer (5).

8. Anlage gemäß einem der vorhergehenden Ansprüche, **gekennzeichnet durch** eine stromab der Behandlungsvorrichtung (1) und stromauf der ersten Abgasbehandlungsvorrichtung (10) und/oder des Materialvorwärmers (5) aus dem Abgasstrang abgehende Umgehungsleitung (18) für einen Teilstrom des Abgases (6), die stromauf der zweiten Abgasbehandlungsvorrichtung (17) in den Bypass (15) mündet.

9. Verfahren zur Behandlung des aus einer Behandlungsvorrichtung (1) zur mechanischen und/oder thermischen Behandlung eines anorganischen Materials stammenden Abgases (6), wobei das Abgas (6) zunächst zumindest teilweise in einer ersten Abgasbehandlungsvorrichtung (10) in Form einer Entstickungsvorrichtung behandelt wird, **dadurch gekennzeichnet, dass** das Abgas (6) anschließend, zumindest temporär, teilweise über einen Hauptabschnitt (16) eines Abgasstrangs umgehenden Bypass (15) geführt wird, wobei das über den Bypass (15) geführte Abgas (6) in einer zweiten Abgasbehandlungsvorrichtung (17) behandelt wird.

10. Verfahren gemäß Anspruch 9, **dadurch gekennzeichnet, dass** das durch den Hauptabschnitt (16) und/oder den Bypass (15) geführte Abgas (6) zumindest temporär zum Vorwärmen und/oder Trocknen des anschließend der Behandlungsvorrichtung (1) zuzuführenden Materials genutzt wird.

11. Verfahren gemäß Anspruch 10, **dadurch gekennzeichnet, dass** eine Verteilung des Abgases (6) auf den Hauptabschnitt (16) und den Bypass (15) in Abhängigkeit von einem Wärmeenergiebedarf für das Vorwärmen und/oder Trocknen des Materials erfolgt.

12. Verfahren gemäß einem der Ansprüche 9 bis 11, **dadurch gekennzeichnet, dass** das Abgas (6) in der ersten Abgasbehandlungsvorrichtung (10) mittels SNCR behandelt wird.

13. Verfahren gemäß einem der Ansprüche 9 bis 12, **dadurch gekennzeichnet, dass** in dem Abgas (6) für die Behandlung in der ersten Abgasbehandlungsvorrichtung (10) ein Reduktionsmittel (9) überstöchiometrisch dosiert wird, wobei das Reduktionsmittel (9) zumindest teilweise mittels der zweiten Abgasbehandlungsvorrichtung (17) gebunden oder umgewandelt wird.

14. Verfahren gemäß einem der Ansprüche 9 bis 13, **dadurch gekennzeichnet, dass** das Abgas (6) in der zweiten Abgasbehandlungsvorrichtung (17) mittels SCR und/oder einer Adsorptionsvorrichtung und/oder einer Absorptionsvorrichtung behandelt wird.

15. Verfahren gemäß einem der Ansprüche 9 bis 14, **dadurch gekennzeichnet, dass** das Abgas (6) mit einer Temperatur von ≤ 120°C und vorzugsweise von ca. 100°C durch den Bypass (15) geführt wird.

16. Verfahren gemäß einem der Ansprüche 9 bis 15, **dadurch gekennzeichnet, dass** ein Teilstrom des Abgases (6) zwischen der Behandlungsvorrichtung (1) und der ersten Abgasbehandlungsvorrichtung (10) aus dem Abgasstrang abgezweigt und stromauf der zweiten Abgasbehandlungsvorrichtung (17) in den Bypass (15) geführt wird.

## Claims

1. Installation having a treatment device (1) for the mechanical and/or thermal treatment of an inorganic material which generates exhaust gas (6), having a first exhaust-gas treatment device (10) which is integrated into an exhaust tract for the treatment device (1) and which comprises a denitrification device, and having a second exhaust-gas treatment device (17) which follows the first exhaust-gas treatment device (10) in a flow direction of the exhaust gas (6) and which is integrated into a bypass (15) past a main portion (16) of the exhaust tract, **characterized by** a configuration such that only a partial stream of the exhaust gas can be conducted via the bypass (15).

2. Installation according to Claim 1, **characterized in that** a mill (4) for the material, which is positioned upstream of the treatment device (1) with respect to the material flow, is integrated into or downstream of the main portion (16) of the exhaust tract such that pre-warming and/or drying of the material can be performed by means of an exhaust-gas stream conducted through the mill (4).

3. Installation according to any of the preceding claims, **characterized in that** the first exhaust-gas treatment device (10) comprises an SNCR denitrification device (10).

4. Installation according to any of the preceding claims, **characterized in that** the first exhaust-gas treatment device (10) comprises a dosing device (8) for the introduction of a reducing agent (9) into the exhaust gas (6), and the second exhaust-gas treatment device (17) comprises a device for binding or converting the reducing agent (9).

5. Installation according to any of the preceding claims, **characterized in that** the second exhaust-gas treatment device (17) comprises an SCR denitrification device (17) and/or an adsorption device and/or an absorption device.

6. Installation according to any of the preceding claims, **characterized in that** the distribution of the exhaust gas (6) between the main portion (16), on the one hand, and the bypass (15), on the other hand, is variable by means of a distributing device.

7. Installation according to any of the preceding claims, **characterized by** a material pre-warmer (5) integrated into the exhaust tract.

8. Installation according to any of the preceding claims, **characterized by** a circumvention line (18), which proceeds from the exhaust tract downstream of the treatment device (1) and upstream of the first exhaust-gas treatment device (10) and/or the material pre-warmer (5), for a partial stream of the exhaust gas (6), which circumvention line opens into the bypass (15) upstream of the second exhaust-gas treatment device (17).

9. Method for the treatment of the exhaust gas (6) originating from a treatment device (1) for the mechanical and/or thermal treatment of an inorganic material, wherein the exhaust gas (6) is initially at least partially treated in a first exhaust-gas treatment device (10) in the form of a denitrification device, **characterized in that** the exhaust gas (6) is subsequently, at least temporarily, conducted partially via a main portion (16) of a bypass (15) which circumvents an exhaust tract, wherein the exhaust gas (6) that is conducted via the bypass (15) is treated in a second exhaust-gas treatment device (17).

10. Method according to Claim 9, **characterized in that** the exhaust gas (6) conducted through the main portion (16) and/or the bypass (15) is utilized at least temporarily for pre-warming and/or drying the material that is subsequently to be fed to the treatment device (1).

11. Method according to Claim 10, **characterized in that** a distribution of the exhaust gas (6) between the main portion (16) and the bypass (15) is performed in a manner dependent on a thermal energy requirement for the pre-warming and/or drying of the material.

12. Method according to any of Claims 9 to 11, **characterized in that** the exhaust gas (6) is treated in the first exhaust-gas treatment device (10) by means of SNCR.

13. Method according to any of Claims 9 to 12, **characterized in that** a reducing agent (9) is dosed superstoichiometrically in the exhaust gas (6) for the treatment in the first exhaust-gas treatment device (10), wherein the reducing agent (9) is at least partially bound or converted by means of the second exhaust-gas treatment device (17).

14. Method according to any of Claims 9 to 13, **characterized in that** the exhaust gas (6) is treated in the second exhaust-gas treatment device (17) by means of SCR and/or an adsorption device and/or an absorption device.

15. Method according to any of Claims 9 to 14, **characterized in that** the exhaust gas (6) is conducted at a temperature of ≤ 120°C and preferably of approximately 100°C through the bypass (15).

16. Method according to any of Claims 9 to 15, **characterized in that** a partial stream of the exhaust gas (6) is branched off from the exhaust tract between the treatment device (1) and the first exhaust-gas treatment device (10) and is conducted into the bypass (15) upstream of the second exhaust-gas treatment device (17).

## Revendications

1. Installation comprenant un dispositif de traitement (1) destiné au traitement mécanique et/ou thermique d'un matériau minéral générant des effluents gazeux (6), l'installation comprenant un premier dispositif de traitement d'effluents gazeux (10), intégré dans une chaîne d'effluents gazeux du dispositif de traitement (1) et pourvu d'un dispositif de dénitruration, et un deuxième dispositif de traitement d'effluents gazeux (17), faisant suite au premier dispositif de traitement d'effluents gazeux (10) dans le sens d'écoulement des effluents gazeux (6) et intégré dans une dérivation (15) menant à une portion principale (16) de la chaîne d'effluents gazeux, **caractérisée par** une configuration permettant de guider seulement un écoulement partiel des effluents gazeux par le biais de la dérivation (15).

2. Installation selon la revendication 1, **caractérisée en ce qu'**un broyeur (4), destiné au matériau et monté en amont du dispositif de traitement (1) par rapport au flux de matériau, est intégré dans la portion principale (16), ou en aval de celle-ci, de la chaîne d'effluents gazeux de sorte qu'un préchauffage et/ou un séchage du matériau puissent être effectués à l'aide du flux d'effluents gazeux guidés à travers le broyeur (4).

3. Installation selon l'une des revendications précédentes, **caractérisée en ce que** le premier dispositif de traitement d'effluents gazeux (10) comprend un dispositif de dénitruration SNCR (10).

4. Installation selon l'une des revendications précédentes, **caractérisée en ce que** le premier dispositif de dénitruration d'effluents gazeux (10) comprend un dispositif de dosage (8) destiné à introduire un agent réducteur (9) dans les effluents gazeux (6) et le deuxième dispositif de dénitruration d'effluents gazeux (17) comprend un dispositif de liaison ou de conversion de l'agent réducteur (9).

5. Installation selon l'une des revendications précédentes, **caractérisée en ce que** le deuxième dispositif de traitement d'effluents gazeux (17) comprend un dispositif de dénitruration SCR (17) et/ou un dispositif d'adsorption et/ou un dispositif d'absorption.

6. Installation selon l'une des revendications précédentes, **caractérisée en ce que** la répartition des effluents gazeux (6) entre la portion principale (16) d'une part et la dérivation (15) d'autre part peut être modifiée au moyen d'un dispositif de répartition.

7. Installation selon l'une des revendications précédentes, **caractérisée par** un préchauffeur de matériau intégré dans la chaîne d'effluents gazeux (5).

8. Installation selon l'une des revendications précédentes, **caractérisée par** un conduit de dérivation (18), destiné à un écoulement partiel des effluents gazeux (6), qui part de la chaîne d'effluents gazeux en aval du dispositif de traitement (1) et en amont du premier dispositif de traitement d'effluents gazeux (10) et/ou du préchauffeur de matériau (5) et qui débouche dans la dérivation (15) en amont du deuxième dispositif de traitement d'effluents gazeux (17).

9. Procédé de traitement des effluents gazeux (6) provenant d'un dispositif de traitement (1) destiné au traitement mécanique et/ou thermique d'un matériau minéral, les effluents gazeux (6) étant d'abord traités au moins partiellement dans un premier dispositif de traitement d'effluents gazeux (10) se présentant sous la forme d'un dispositif de dénitruration, **caractérisé en ce que** les effluents gazeux (6) sont guidés ensuite, au moins temporairement, en partie par une potion principale (16) d'une dérivation (15), les effluents gazeux (6) guidés par la dérivation (15) étant traités dans un deuxième dispositif de traitement d'effluents gazeux (17).

10. Procédé selon la revendication 9, **caractérisé en ce que** les effluents gazeux (6) guidés à travers la portion principale (16) et/ou la dérivation (15) sont utilisés au moins temporairement pour préchauffer et/ou sécher le matériau à amener ensuite au dispositif de traitement (1).

11. Procédé selon la revendication 10, **caractérisé en ce qu'**une répartition des effluents gazeux (6) a lieu entre la portion principale (16) et la dérivation (15) en fonction d'un besoin d'énergie thermique pour préchauffer et/ou sécher le matériau.

12. Procédé selon l'une des revendications 9 à 11, **caractérisé en ce que** les effluents gazeux (6) sont traités par SNCR dans le premier dispositif de traitement d'effluents gazeux (10).

13. Procédé selon l'une des revendications 9 à 12, **caractérisé en ce qu'**un agent réducteur (9) est dosé de manière stœchiométrique dans les effluents gazeux (6) en vue du traitement dans le premier dispositif de traitement d'effluents gazeux (10), l'agent réducteur (9) étant au moins partiellement lié ou converti à l'aide du deuxième dispositif de traitement d'effluents gazeux (17).

14. Procédé selon l'une des revendications 9 à 13, **caractérisé en ce que** les effluents gazeux (6) sont traités dans le deuxième dispositif de traitement d'effluents gazeux (17) par SCR et/ou dans un dispositif d'adsorption et/ou dans un dispositif d'absorption.

15. Procédé selon l'une des revendications 9 à 14, **caractérisé en ce que** les effluents gazeux (6) sont guidés à travers la dérivation (15) à une température <120 °C et de préférence d'environ 100 °C.

16. Procédé selon l'une des revendications 9 à 15, **caractérisé en ce qu'**un écoulement partiel des effluents gazeux (6) est dérivé de la chaîne d'effluents entre le dispositif de traitement (1) et le premier dispositif de traitement d'effluents gazeux (10) et est guidé jusque dans le circuit de dérivation (15) en amont du deuxième dispositif de dénitruration d'effluents gazeux (17).
